# EUROPEAN PATENT APPLICATION

(11) **EP 1 219 799 A2**
(43) Date of publication of application: **03.07.2002**
(21) Application number: 01117759.9
(22) Date of filing: 31.07.2001
(51) Int. Cl.: F02B 37/18, F02B 37/16, F01N 3/28, F02B 41/10

(54) **Exhaust gas turbine for internal combustion engine and exhaust turbo-supercharger**

(30) Priority: 26.12.2000 JP 2000394090
(71) Applicant: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Hohkita, Atsushi, Hitachi-shi, Ibaraki 316-0015 (JP); Hirai, Yoshiaki, Hitachinaka-shi, Ibaraki 312-0042 (JP); Katsuno, Toshiyuki, Hitachinaka-shi, Ibaraki 312-0003 (JP)
(74) Representative: Beetz & Partner Patentanwälte

(57) **Abstract**

In order to activate a catalyst in a short time in an internal combustion engine having a turbine (2), an exhaust bypass flow passage and an exhaust bypass valve (9) and its valve seat provided in the exhaust bypass flow passage are set to sizes large enough to be able to make almost all the amount of the exhaust gas bypass the turbine (2), and the exhaust bypass valve (9) is controlled by a driving actuator (11) using a motor or a solenoid. Rapid activation of the catalyst (17) is implemented by totally opening the exhaust bypass valve (9) during the starting period of operation of the internal combustion engine to make almost all the amount of exhaust gas flow into the catalyst (17,21) by bypassing the turbine (2). Since almost all the amount of exhaust gas flows into the catalyst (17) by bypassing the turbine (2) by totally opening the exhaust bypass valve (9) during the starting period of operation of the internal combustion engine, the activation of the catalyst (17) is hardly retarded compared to a case where no turbine (2) exists in the downstream side of the exhaust manifold (1).

## Description

### BACKGROUND OF THE INVENTION

The present invention relates to an exhaust gas turbine for an internal combustion engine which is used as a turbo-supercharger or a turbo-generator by combining with a supercharger arranged in an intake air passage as the driving force source or by combining with an electric generator as the driving force source, and relates to the turbo-supercharger and the turbo-generator.

Conventional internal combustion engines having an exhaust gas turbine are disclosed in Japanese Patent Application Laid-Open No.60-237153 and Japanese Patent No.3090536. Particularly, in the latter, a catalyst is arranged in an exhaust gas passage connecting an exhaust manifold of the engine with a muffler, and a turbine is arranged in another exhaust passage connecting the exhaust manifold of the engine with the muffler, and which of the exhaust passages the exhaust gas is allowed to flow through is controlled depending on necessity using a control valve. In this structure, since flow of the exhaust gas can be switched so that the exhaust gas may pass through only the catalyst during a starting period of operation of the internal combustion engine, it is can be prevented that heat of the exhaust gas is removed by the turbine to decrease temperature of the exhaust gas. Therefore, it is possible to solve a problem of a vehicle having the turbine that catalyst activation is retarded at starting the engine.

However, the prior art described above has problems in that the structure of the exhaust gas passage becomes complicated, and that the two exhaust gas passages are required in the engine room and under the vehicle floor, and that the efficiency of piping work is lowered.

In addition, adjustment of the characteristics of the switching valve needs to be performed by mounting all of the turbine, the catalyst and the pipe-switching valve on the engine.

### SUMMARY OF THE INVENTION

An object of the present invention is to provide a simple structure of the exhaust gas passage by integrating the exhaust gas passage and/or the control valve with the turbine in a unit while maintaining the function capable of switching the flow of exhaust gas so that the exhaust gas may be passed through only the catalyst during a starting period of operation of the internal combustion engine.

The present invention to solve the above problems is as follows.
1. An exhaust gas turbine for an internal combustion engine connected to an exhaust pipe of the engine, which comprises an exhaust gas turbine inlet port for guiding exhaust gas into the turbine; an exhaust gas catalyst inlet port for guiding the exhaust gas to a catalyst, the exhaust gas after passing through the turbine being guided into the exhaust gas catalyst inlet port; and an open/close valve for opening and closing the exhaust gas catalyst inlet port.
2. An exhaust gas turbine for an internal combustion engine, which comprises an exhaust gas passage for guiding exhaust gas into a catalyst, the exhaust gas passage being connected to an exhaust passage of the engine; a bypass exhaust passage integrated with the exhaust gas passage as a unit; and a turbine which is attached to the bypass exhaust passage.
3. An exhaust gas turbine for an internal combustion engine having a waste gate valve, wherein the waste gate valve is constructed so as to be kept open during a starting period of operation of the engine.
4. An exhaust gas turbine for an internal combustion engine having a waste gate valve which is attached together with a catalyst to an exhaust passage of the internal combustion engine, wherein the waste gate valve is constructed so as to be kept open during a starting period of operation of the engine to directly guide exhaust gas into the catalyst.
5. An exhaust gas turbine for an internal combustion engine placed in an exhaust passage, which comprises a turbine case having a passage for guiding exhaust gas into the turbine and a bypass passage bypassing the turbine, the passage and the bypass passage being arranged in parallel; and a switching valve mechanism for switching which of the both passages the exhaust gas is allowed to flow through.
6. An exhaust gas turbine for an internal combustion engine placed in an exhaust passage, which comprises a turbine case having a first passage for guiding exhaust gas into said turbine and a bypass passage bypassing the turbine, the first passage and the bypass passage being arranged in parallel; a separating wall for separating between the first passage and the bypass passage; an opening arranged in the separating wall, a waste gate being attached to the opening; and an open/close valve arranged at an inlet of the bypass passage.
7. An exhaust turbo-supercharger for an internal combustion engine comprising a turbine impeller and a turbine case enclosing the turbine impeller, the turbine impeller being rotated by exhaust gas of the internal combustion engine; a compressor impeller rotated and a compressor case enclosing the compressor impeller, the compressor impeller being fixed on and rotated by a turbine shaft integrated with the turbine impeller as a unit; a radial bearing part for supporting the turbine shaft in the radial direction; a thrust bearing part for supporting the turbine shaft in the thrust direction; and a bearing hosing for supporting the bearing portions, which further comprises an exhaust bypass flow passage, the exhaust bypass flow passage being independent of and arranged in parallel with a turbine case scroll flow passage for guiding the exhaust gas into the turbine impeller; and a valve seat plane and an exhaust bypass valve in the exhaust bypass flow passage.

In detail, the problems described above can be solved by the following method. That is, the exhaust bypass flow passage connecting the turbine case inlet flow passage for guiding the exhaust gas to the turbine impeller with the turbine case outlet flow passage for discharging the exhaust gas passed through the turbine impeller to the outside of the turbine case and the exhaust bypass valve and its valve seat provided in the exhaust bypass flow passage are set to sizes large enough to be able to make almost all the amount of the exhaust gas bypass the turbine. Otherwise, an exhaust bypass flow passage is formed independently of and in parallel to the turbine case scroll flow passage for guiding the exhaust gas to the turbine impeller, and the exhaust bypass valve and its valve seat provided in the exhaust bypass flow passage are set to sizes large enough to be able to make almost all the amount of the exhaust gas bypass the turbine. Then, the exhaust bypass valve is controlled by a driving actuator using a motor or a solenoid.

According to the structure described above, since almost all the amount of exhaust gas can flow into the catalyst during a starting period of operation of the internal combustion engine by totally opening the exhaust bypass valve, activation of the catalyst does not retarded.

Further, since the exhaust passage is integrated with the turbine case as a unit, the piping work becomes simple.

Further, since the switching valve (the bypass control valve, or the waste gate valve) is integrated with the turbine case as a unit, the structure becomes simple.

Furthermore, adjustment of the valve characteristics can be controlled in prior to mounting the exhaust turbo-supercharger on a system.

### BRIEF DESCRIPTION OF THE DRAWINGS

FIG. 1 is a cross-sectional view showing a first embodiment.
FIG. 2 is a cross-sectional view showing another embodiment.
FIG. 3 is a cross-sectional view showing a second embodiment.
FIG. 4 is a cross-sectional view showing a third embodiment.
FIG. 5 is a cross-sectional view showing a fourth embodiment.
FIG. 6 is a cross-sectional view showing a fifth embodiment.
FIG. 7 is a cross-sectional view showing a sixth embodiment.
FIG. 8 is a cross-sectional view showing a seventh embodiment.
FIG. 9 is a cross-sectional view showing an eighth embodiment.
FIG. 10 is a view showing an embodiment of an internal combustion engine system in accordance with the present invention.
FIG. 11 is a graph showing an example of steady-state performance characteristics of the internal combustion engine in accordance with the present invention.
FIG. 12 is a characteristic diagram showing an example of control of an exhaust bypass valve in accordance with the present invention during a running state of a vehicle.
FIG. 13 is a graph showing change in catalyst temperature after starting operation of the internal combustion engine in accordance with the present invention.
FIG. 14 is a cross-sectional view showing a ninth embodiment.

### DETAILED DESCRIPTION OF THE PREFERRED EMBODIMENTS

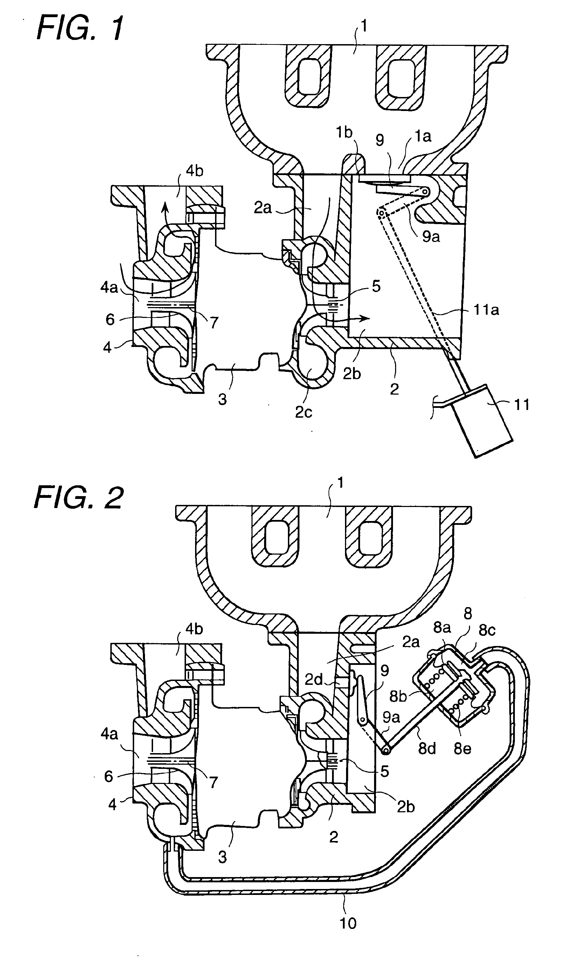

FIG. 1 shows an embodiment (1). A turbine case 2 of exhaust turbo-supercharger is fixed to an exhaust manifold 1, exhaust gas is adiabatically expanded in the process of flowing from a turbine case inlet flow passage 2a into a turbine impeller 5 through a turbine scroll flow passage 2c and then flowing into a turbine case outlet flow passage 2b to rotate a compressor impeller 6. As the compressor impeller 6 is rotated, intake air is taken in through a compressor case inlet flow passage 4a, and kinetic energy of the intake air is converted to pressure in the compressor impeller 6 and the flow passage of the compressor case 4, and the compressed intake air is supplied to an engine through a compressor case outlet flow passage 4b. An exhaust bypass flow passage 1a arranged independently of and in parallel to the turbine scroll flow passage 2cfor guiding exhaust gas into the turbine impeller 5 is formed, and a valve seat plane 1b and an exhaust bypass valve 9 are provided in the an exhaust bypass flow passage 1a. Each of the exhaust bypass flow passage 1a, the valve seat plane 1b and the exhaust bypass valve 9 has a size large enough to be able to make almost all the amount of exhaust gas bypass the turbine 2. The exhaust bypass valve 9 is controlled to be opened and closed by a driving actuator 11 using a motor or a solenoid through a link 9a and a rod 11a.

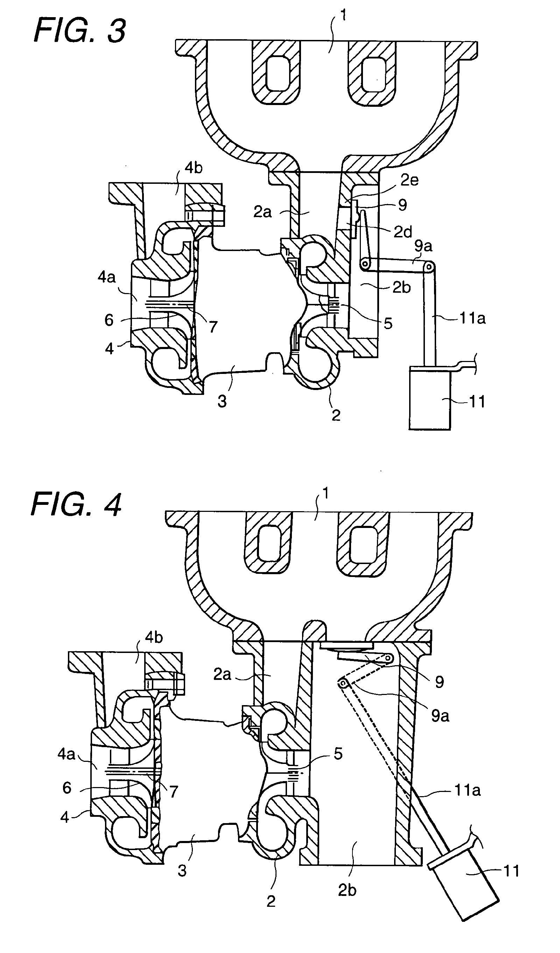

FIG. 3 shows an embodiment (2). An exhaust bypass valve 9 and a valve seat plane 2e are provided in an exhaust bypass flow passage 2d which connects the turbine case inlet flow passage 2a for guiding exhaust gas to the turbine impeller 5 of the exhaust turbo-supercharger with the turbine case outlet flow passage 2b for discharging the exhaust gas passed through the turbine impeller 5 to the outside of the turbine case 2. Each of the exhaust bypass flow passage 2d, the valve seat plane 2e and the exhaust bypass valve 9 has a size large enough to be able to make almost all the amount of exhaust gas bypass the turbine 2. The exhaust bypass valve 9 is controlled to be opened and closed by a driving actuator using a motor through a link 9a and a rod 11a.

FIG. 4 shows an embodiment (3). The present embodiment is an example in which the turbine case outlet flow passage 2b of the embodiment (1) is opened in the flowing direction of exhaust gas when the exhaust bypass valve 9 is opened. In order to reduce harmful component in the exhaust gas at starting operation of the internal combustion engine, the catalyst is arranged just after the turbine case outlet flow passage 2b. In the present embodiment, since the exhaust gas passed through the exhaust bypass valve 9 is directly guided into the catalyst, temperature decrease of the exhaust gas is smaller than that of the embodiment (1).

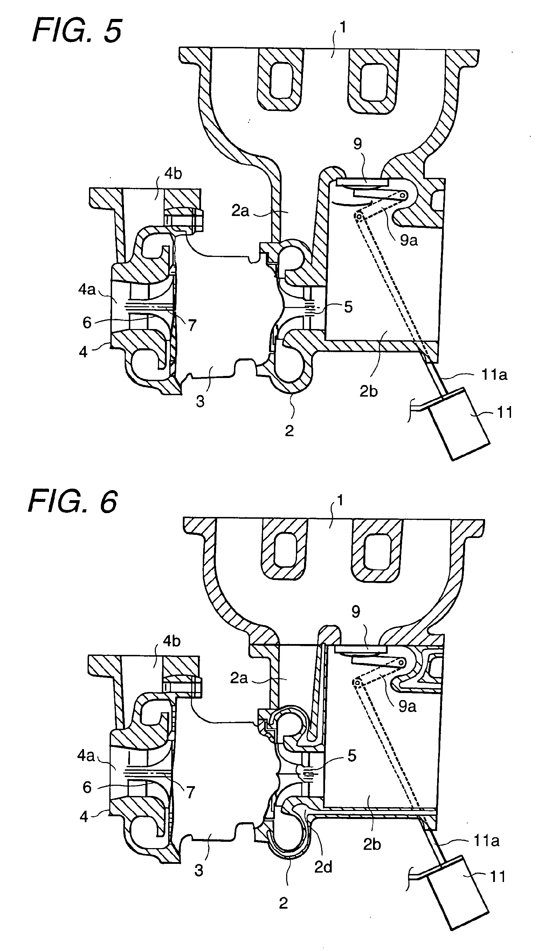

FIG. 5 shows an embodiment (4). The present embodiment is an example in which the exhaust manifold and the turbine case are integrated as a unit. By doing so, the size of combination of the exhaust manifold and the turbine case can be made smaller and the volume of the exhaust flow passage from the combustion chamber of the internal combustion engine to the turbine impeller can be made smaller to improve the turbine work, and further fastening screws and fastening work to attaching the turbine to the exhaust manifold can be eliminated to decrease the cost.

FIG. 6 shows an embodiment (5). The present embodiment is an example in which the turbine case 2 of the embodiment (1) is changed to a double wall structure to increase the thermal insulation effect of the turbine case 2. As a methods of manufacturing the double wall structure, there are a precision casting method through the lost-wax process and a plate material fabrication method.

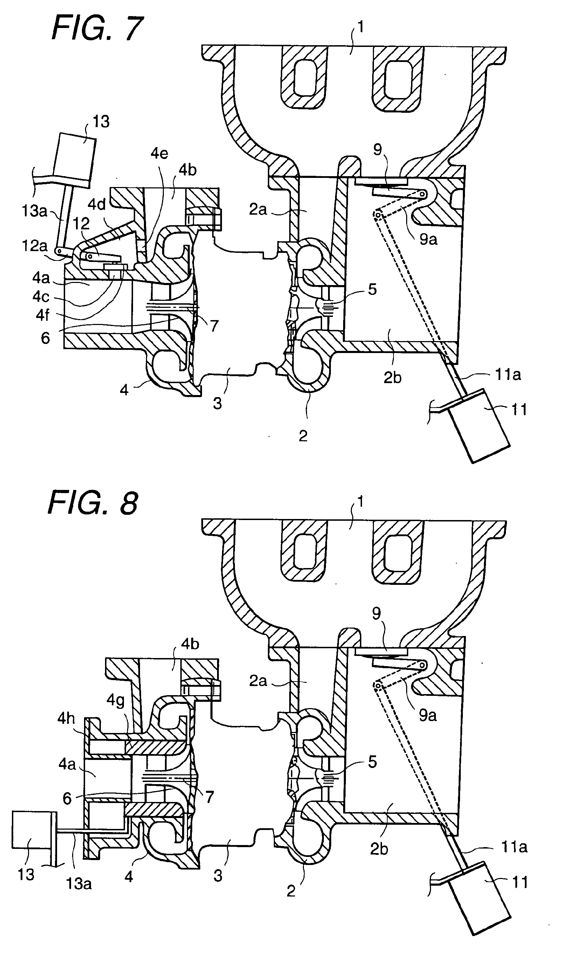

FIG. 7 shows an embodiment (5). The present embodiment is that in the embodiment (1), intake air flow passages 4c, 4d, 4e connecting the compressor case inlet flow passage 4a for guiding intake air to the compressor impeller 6 with the compressor outlet flow passage 4b for guiding the intake air passed through the compressor impeller 6 to the outside of the compressor case 4 are formed, and an intake bypass valve 12 and its valve seat 4f are provided in the intake bypass flow passage. The intake bypass valve 12 is controlled to be opened and closed by a driving actuator 13 using a motor or a solenoid valve through a link 12a and a rod 13a. When the exhaust bypass valve 9 is opened and the exhaust gas is bypassed in an operation mode not requiring supercharging, the compressor impeller 6 does not need to be rotated and the intake airflow passage sometimes becomes a flow resistance. In such a case, the intake resistance can be reduced by opening the intake bypass valve 12 to bypass the intake air.

FIG. 8 shows an embodiment (7). The present embodiment has a structure that in the embodiment (1), a movable part 4g forming an R-profile of the compressor case 4 opposite to a blade outer peripheral R-profile portion of the compressor impeller 6 is movable in the axial direction of the turbine shaft 7. A cylinder member 4h is inserted into the compressor inlet flow passage 4a so that the flow passage volume of the compressor inlet flow passage 4a may be not largely changed by moving the movable part 4g. The movable part 4g is connected to a driving actuator 13 using a motor or a solenoid valve through a rod 13a to be controlled its displacement.

When the exhaust bypass valve 9 is opened and the exhaust gas is bypassed in an operation mode not requiring supercharging, the compressor impeller 6 does not need to be rotated and the intake airflow passage sometimes becomes a flow resistance. In such a case, the movable part 4g is moved in the axial direction of the turbine shaft in the direction apart from the blade outer peripheral R-profile portion of the compressor impeller 6 in the axial direction of the turbine shaft 7 to form a gap between the blade outer peripheral R-profile portion of the compressor impeller 6 and the R-profile of the compressor case 4 opposite to the blade outer R-profile portion. Therefore, the intake resistance can be reduced by bypassing the intake air using the gap. According to the present embodiment, the intake bypass flow passage of the compressor portion can be made simpler than that of the embodiment (6) described above, and accordingly the compressor portion can be made small in size.

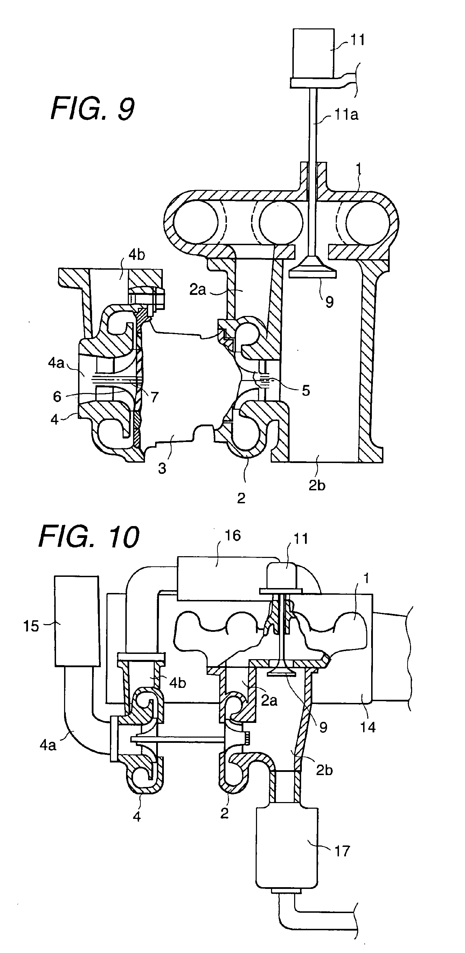

FIG. 9 shows an embodiment (8). The embodiment (8) has a structure that in the embodiment (3), the opening area of the bypass flow passage is changed by inserting and extracting the exhaust bypass valve 9 into and from its opening portion. A guide of a rod 11a connecting between the exhaust bypass valve 9 and an actuator 11 is formed in the exhaust manifold 1. By changing the shape of the exhaust bypass valve, the stroke-opening area characteristic of the exhaust bypass valve can be freely changed.

FIG. 10 shows an embodiment of an internal combustion engine system. Air is taken in from a compressor case inlet flow passage 4a through an air cleaner 15 using a compressor 4, and the compressed air is supplied from a compressor case outlet flow passage 4b to a combustion chamber of the internal combustion engine through an inter-cooler 16. Exhaust gas flows out from an exhaust manifold 1 to a turbine 2 through a turbine case inlet flow passage 2a, and then flows from a turbine case outlet flow passage 2b into a catalyst 17.

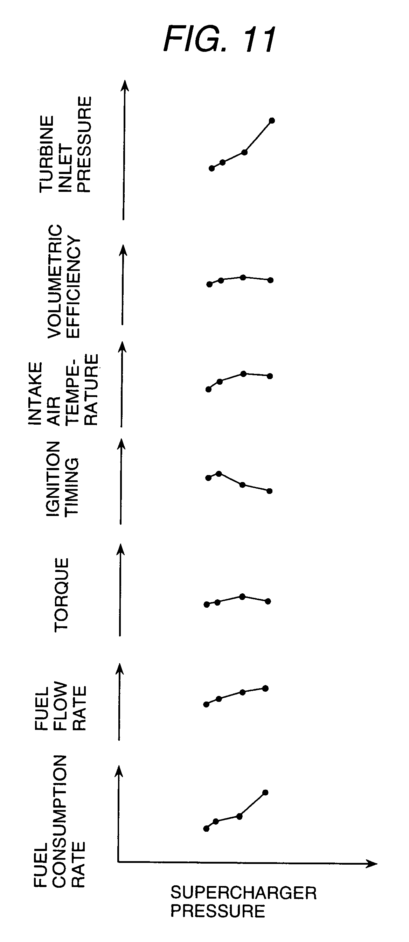

FIG. 11 shows an example of steady-state performance characteristics of the internal combustion engine. Supercharging pressure becomes maximum when the exhaust bypass valve 9 is totally closed. As the exhaust bypass valve is gradually being opened, the turbine inlet pressure is largely decreased (the points in the right hand side end in FIG. 11). However, there is a point at which the volumetric efficiency of the internal combustion engine is slightly improved. In addition, there is a point at which due to decrease in the supercharging pressure, the intake air temperature is decreased to make knocking hardly occur, the ignition timing can be made to advance and the torque is also improved. Further, the fuel flow rate can be reduced to improve the fuel consumption rate. Since the torque can be reduced in a range of operating mode where the accelerator pedal is not stepped in, the supercharging pressure can be reduced by opening the exhaust bypass valve in order to further improve the fuel economy.

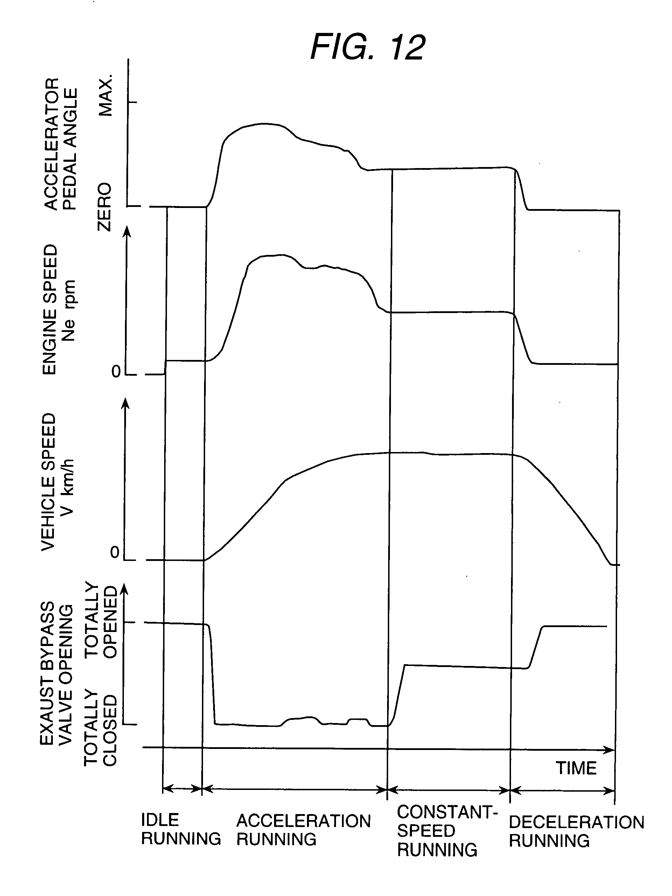

FIG. 12 shows an example of control of the exhaust bypass valve during a running state of a vehicle. During the period from starting operation to idle operation of the internal combustion engine, the exhaust bypass valve is totally opened by judging that the accelerator pedal angle is zero and the engine speed is an idle setting rotation speed. During acceleration running, the exhaust bypass valve is totally closed by judging from increasing rates of the accelerator pedal angle, the engine speed and the vehicle speed. Since the turbine is matched so that the low speed torque may become maximum, the acceleration performance of the vehicle can be improved compared to that in the prior art. During acceleration running, fine angle control of the exhaust bypass valve is performed in order to prevent a shock caused by shifting of the speed change gear. During constant speed running, the exhaust bypass valve is nearly totally opened to decrease the turbine inlet pressure and to improve the fuel consumption rate by judging form increasing rates of the accelerator pedal angle, the engine speed and the vehicle speed. During deceleration running, the exhaust bypass valve is totally closed by judging that the accelerator pedal angle is maximum and the engine speed is the idle setting rotation speed. As described above, by controlling the exhaust bypass valve so as to change between the operating mode requiring supercharging and the operating mode not requiring supercharging, it is possible to match operation of the exhaust bypass valve with operation of the internal combustion engine which makes the fuel economy and the power performance optimum.

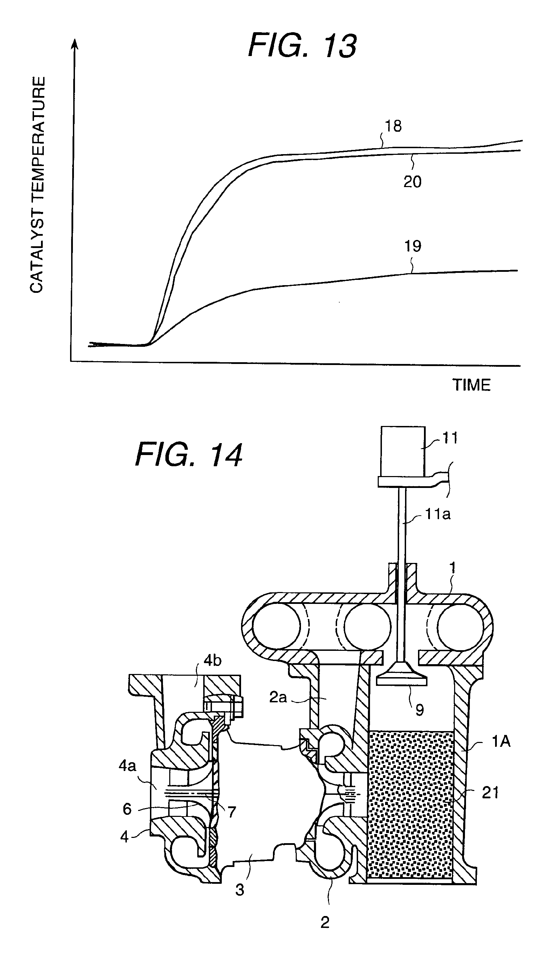

FIG. 13 shows change in catalyst temperature after starting operation of the internal combustion engine.

The temperature characteristic 18 shows temperature of the catalyst portion of the internal combustion engine without mounting any exhaust turbo-supercharger, and the temperature characteristic 19 shows temperature of the catalyst portion of the internal combustion engine with mounting an exhaust turbo-supercharger in which the temperature of the catalyst portion is lowered to approximately 40 % to 55 % of the temperature characteristic 18. The temperature characteristic 20 shows temperature of the catalyst portion of the internal combustion enginewith mounting the exhaust turbo-supercharger in accordance with the present invention, and the temperature of the catalyst portion is raised up to 80 % to 100 % of the temperature characteristic 18 because almost all the amount of exhaust gas passes through the exhaust bypass valve and flows into the catalyst.

FIG. 2 shows a further embodiment. In this embodiment, the turbine case 2 is fixed to an exhaust manifold 1, and exhaust gas is adiabatically expanded in the process that the exhaust gas flows form the turbine case inlet flow passage 2a into the turbine impeller 5 and is discharged to the turbine outlet flow passage 2b to rotate the compressor impeller 6 fixed to the turbine shaft 7. As the compressor impeller 6 is rotated, intake air is taken in through a compressor case inlet flow passage 4a, and kinetic energy of the intake air is converted to pressure in the compressor impeller 6 and the flow passage of the compressor case 4, and the compressed intake air is supplied to an engine through a compressor case outlet flow passage 4b.

In order to improve output power within a wide range from a low speed region to a high speed region in a case of an internal combustion engine for a vehicle, a turbine capacity is set rather small in order to obtain a target torque in a low speed region. In addition, in order to prevent damage of the intake air system due to an abnormal increase in supercharging pressure, an exhaust bypass valve for controlling the supercharging pressure below a set supercharging pressure is provided. The present embodiment comprises a mechanical actuator for controlling the exhaust bypass valve of this kind to open at starting operation of the engine. The mechanical actuator is divided into an atmospheric pressure chamber 8b and a pressure chamber 8c by a diaphragm 8a, and a rod 8d is fixed to the atmospheric pressure chamber 8b side of the diaphragm 8a, and the rod 8d is connected to a link 9a of the exhaust bypass valve 9. The pressure chamber 8c and the compressor case 4 are connected to each other by a hose 10 to allow the supercharging pressure entering into the pressure chamber 8c. When the pressure of the pressure chamber 8c is increased by increasing of the supercharging pressure and exceeds a set supercharging pressure, a force caused by the supercharging pressure overcomes the force of a spring 8e to start to move the rod 8d and open the exhaust bypass valve 9. Since the stroke of the actuator is in proportion to the supercharging pressure in the case of the mechanical actuator, the present embodiment comprises a mechanism for forcibly opening the exhaust bypass valve at starting operation of the engine regardless of the supercharging pressure. Further, the opening area of the exhaust bypass flow passage 2d is determined so that when the exhaust bypass valve is controlled to be totally opened at starting operation of the engine, an amount of exhaust gas flowing into the turbine may essentially become minimum and can not practically rotate the turbine. In the other operation regions, the opening area of the exhaust bypass flow passage 2d is controlled to the totally closed state or in a specified small opening state by the exhaust bypass valve 9. Therefore, in the present embodiment, the characteristic of the exhaust turbo-supercharger and the characteristic of the internal combustion engine are matched with each other so as to become the full load performance at a specified opening in which the exhaust bypass valve is partially closed from the totally opened state. Even in the case of the mechanical actuator in the embodiment, the characteristic of the supercharging pressure in the partial load and the characteristic of the turbine inlet pressure are determined by the stroke characteristic of the actuator. By constructing as described above, since temperature of the exhaust gas does not decreased during the starting period of operation of the internal combustion engine because the exhaust gas does not pass through the turbine, the catalyst can be rapidly activated. Further, since the length of the piping can be shortened, an amount of heat radiated from the piping can be made smaller, and accordingly the catalyst can be heated up by that amount.

As a technology, which further reduces the turbine pressure and improves the supercharging pressure characteristic and the turbine inlet pressure characteristic, a twin scroll type variable capacity turbine has been designed and practically used. In the twin scroll type variable capacity turbine, nozzle vanes are arranged outside a turbine impeller, and a variable nozzle vane type variable capacity turbine of which the turbine capacity is varied by controlling an opening degree of the nozzle vanes and a turbine case flow passage are divided into two parts using a separating wall, and the turbine capacity is varied by controlling the opening of a switching valve provided in one side of the flow passage inlets. The present invention may be combined with this technology.

FIG. 14 shows another embodiment in accordance with the present invention. In this embodiment, a catalyst 21 is directly mounted into a straight pipe portion 1A of the exhaust passage provided in the turbine case 1. By doing so, the system can be made small in size.

In this example, the turbine can be regarded as a turbine with catalyst, and accordingly, a new type turbine can be provided.

According to the present invention, since an amount of heat removed from the exhaust gas by the turbine can be reduced, an amount of heat heating the catalyst is increased by that amount and accordingly the catalyst can be activated early.

Since the exhaust passage is integrated with the turbine case as a unit, the system can be compactly formed.

## Claims

1. An exhaust gas turbine for an internal combustion engine connected to an exhaust pipe of the engine, which comprises:
an exhaust gas turbine inlet port for guiding exhaust gas into said turbine (2);
an exhaust gas catalyst inlet port for guiding the exhaust gas to a catalyst (17, 21), the exhaust gas after passing through said turbine (2) being guided into said exhaust gas catalyst inlet port; and
an open /close valve (9) for opening and closing said exhaust gas catalyst inlet port.

2. An exhaust gas turbine for an internal combustion engine, which comprises:
an exhaust gas passage for guiding exhaust gas into a catalyst (17, 21), said exhaust gas passage being connected to an exhaust passage of said engine;
a bypass exhaust passage integrated with said exhaust gas passage as a unit; and
a turbine (2), which is attached to said bypass exhaust passage.

3. An exhaust gas turbine for an internal combustion engine according to any one of claims 1 and 2, which comprises an open/close valve (9) which is arranged in said exhaust gas catalyst inlet port or in an inlet of said exhaust gas passage guiding the exhaust gas into said catalyst (17, 21).

4. An exhaust gas turbine for an internal combustion engine according to any one of claims 1 to 3, wherein a supercharger disposed in an intake air passage of said internal combustion engine is attached so as to be driven by said turbine (2).

5. An exhaust gas turbine for an internal combustion engine according to any one of claims 1 to 3, wherein an electric generator of said internal combustion engine is attached so as to be driven by said turbine (2).

6. An exhaust gas turbine for an internal combustion engine having a waste gate valve, wherein said waste gate valve is constructed so as to be kept open during a starting period of operation of said engine.

7. An exhaust gas turbine for an internal combustion engine having a waste gate valve which is attached together with a catalyst (17, 21) to an exhaust passage of said internal combustion engine, wherein said waste gate valve is constructed so as to be kept open during a starting period of operation of said engine to directly guide exhaust gas into said catalyst (17, 21).

8. An exhaust gas turbine for an internal combustion engine placed in an exhaust passage, which comprises:
a turbine case (2) having a passage for guiding exhaust gas into said turbine and a bypass passage bypassing said turbine (2), said passage and said bypass passage being arranged in parallel; and
a switching valve mechanism (9, 11, 11a) for switching which of said both passages the exhaust gas is allowed to flow through.

9. An exhaust gas turbine for an internal combustion engine placed in an exhaust passage, which comprises:
a turbine case (2) having a first passage for guiding exhaust gas into said turbine (2) and a bypass passage bypassing said turbine (2), said first passage and said bypass passage being arranged in parallel;
a separating wall for separating between said first passage and said bypass passage;
an opening arranged in said separating wall, a waste gate being attached to said opening; and
an open/close valve (9) arranged at an inlet of said bypass passage.

10. An exhaust gas turbine for an internal combustion engine placed in an exhaust passage, which comprises:
a turbine case (2) having an exhaust passage for guiding exhaust gas into said turbine (2), said exhaust passage being formed in said turbine case (2);
a bypass passage for conducting the exhaust gas downstream of said turbine (2) by bypassing said turbine (2), said bypass passage being arranged at a position in said exhaust passage upstream of said turbine (2); and
an open/close valve (9) for controlling so that said bypass passage may be brought to a large flow state of the exhaust gas during a starting period of operation of said engine and controlling so that said bypass passage may be closed or brought to a small flow state during the other operating state of said engine.

11. An exhaust turbo-supercharger for an internal combustion engine comprising a turbine impeller (5) and a turbine case (2) enclosing said turbine impeller (5), said turbine impeller (5) being rotated by exhaust gas of said internal combustion engine; a compressor impeller (6) rotated and a compressor case (4) enclosing said compressor impeller (6), said compressor impeller (6) being fixed on and rotated by a turbine shaft (7) integrated with said turbine impeller (5) as a unit; a radial bearing part for supporting said turbine shaft (7) in the radial direction; a thrust bearing part for supporting said turbine shaft (7) in the thrust direction; and a bearing hosing for supporting the bearing portions, which further comprises:
an exhaust bypass flow passage (1a), said exhaust bypass flow passage (1a) being independent of and arranged in parallel with a turbine case (2) scroll flow passage (2c) for guiding the exhaust gas into said turbine impeller (6); and
a valve seat plane (1b) and an exhaust bypass valve (9) in said exhaust bypass flow passage (1a).

12. An exhaust turbo-supercharger for an internal combustion engine comprising a turbine impeller (5) and a turbine case (2) enclosing said turbine impeller (5), said turbine impeller (5) being rotated by exhaust gas of said internal combustion engine; a compressor impeller (6) rotated and a compressor case (4) enclosing said compressor impeller (6), said compressor impeller (6) being fixed on and rotated by a turbine shaft (7) integrated with said turbine impeller (6) as a unit; a radial bearing part for supporting said turbine shaft (7) in the radial direction; a thrust bearing part for supporting said turbine shaft (7) in the thrust direction; and a bearing hosing for supporting the bearing portions, which further comprises:
an exhaust bypass flow passage (1a), said exhaust bypass flow passage (1a) connecting a turbine case inlet flow passage (2a) for guiding the exhaust gas to said turbine impeller (5) with a turbine case outlet flow passage (2b) for discharging the exhaust gas passed through said turbine impeller (5) out of said turbine case; and
a valve seat plane (1b) and an exhaust bypass valve (9) in said exhaust bypass flow passage (1a), a driving actuator (11) of said exhaust bypass valve (9) being driven by a motor.

13. An exhaust turbo-supercharger for an internal combustion engine according to claim 11, which comprises a turbine outlet in a downstream side in a flow direction of the exhaust gas flowing in said exhaust bypass flow passage.

14. An exhaust turbo-supercharger for an internal combustion engine according to any one of claims 11 to 13, wherein an exhaust manifold (1) and said turbine case (2) are integrated as a unit.

15. An exhaust turbo-supercharger for an internal combustion engine according to any one of claims 11 to 13, wherein said turbine case (2) is of a double wall structure forming a hollow inside a wall of said turbine case (2).

16. An exhaust turbo-supercharger for an internal combustion engine according to any one of claims 11 to 15, which comprises:
an intake air bypass flow passage, said intake air flow passage connecting a compressor case inlet flow passage (4a) for guiding intake air into said compressor impeller (6) with a compressor outlet flow passage for guiding the intake air passed through said compressor impeller (6); and
an intake air bypass valve (12) and a valve seat (4f) in said intake air bypass flow passage.

17. An exhaust turbo-supercharger for an internal combustion engine according to any one of claims 11 to 15, wherein a movable part forming a compressor case R-profile opposite to a blade outer peripheral R-profile of said compressor impeller is movable in an axial direction of said turbine shaft (7).

18. An exhaust turbo-supercharger for an internal combustion engine according to any one of claims 11 and 13 to 17, wherein a driving actuator (11) of said exhaust bypass valve (9) is driven by a motor.

19. An exhaust turbo-supercharger for an internal combustion engine according to any of claims 11 and 13 to 17, wherein a solenoid valve is used for a driving actuator (11) of said exhaust bypass valve.

20. An exhaust turbo-supercharger for an internal combustion engine according to claim 16, wherein a driving actuator (13) of said intake air bypass valve (12) is driven by a motor.

21. An exhaust turbo-supercharger for an internal combustion engine according to claim 16, wherein a solenoid valve is used for a driving actuator (13) of said intake air bypass valve (12).

22. An exhaust turbo-supercharger for an internal combustion engine according to claim 17, wherein a driving actuator of said movable part forming the compressor case R-profile opposite to the blade outer peripheral R-profile of said compressor impeller (6) is driven by a motor.

23. An exhaust turbo-supercharger for an internal combustion engine according to claim 17, wherein a solenoid valve is used for a driving actuator of said movable part forming the compressor case R-profile opposite to the blade outer peripheral R-profile of said compressor impeller (6).

24. An exhaust turbo-supercharger for an internal combustion engine according to any one of claims 11 and 13 to 17, wherein said exhaust bypass valve (9) is kept open during a starting period of operation of said internal combustion engine.

25. An exhaust turbo-supercharger for an internal combustion engine according to any one of claims 16, 20, 21 and 24, wherein said intake bypass valve (12) is kept open while said exhaust bypass valve (9) is kept open.

26. An exhaust turbo-supercharger for an internal combustion engine according to any one of claims 17, 22 to 24, wherein said movable part forming the compressor case R-profile opposite to the blade outer peripheral R-profile of said compressor impeller (6) is kept apart from the blade outer peripheral R-profile of said compressor impeller while said exhaust bypass valve is kept open.

27. An exhaust turbo-supercharger for an internal combustion engine according to any one of claims 24 to 26, wherein while said exhaust bypass valve (9) is kept open during a starting period of operation of said internal combustion engine, an amount of fuel is controlled so that temperature of the exhaust gas may be increased by making an air-to-fuel ratio rich.

28. An exhaust turbo-supercharger for an internal combustion engine according to any one of claims 11, 13 to 27, wherein catalyst (21) is placed inside a flow passage of said turbine case outlet.

29. An internal combustion engine comprising an exhaust turbo-supercharger and a catalyst (21), wherein said catalyst (21) is disposed in an exhaust flow passage portion where temperature of exhaust gas is higher than temperature of exhaust gas in a turbine impeller portion.

30. An exhaust turbo-supercharger for an internal combustion engine, in the internal combustion engine comprising the exhaust turbo-supercharger, which comprises an exhaust bypass flow passage (1a) independent of and arranged in parallel with a turbine flow passage for guiding exhaust gas into said turbine impeller (5).

31. An exhaust turbo-supercharger for an internal combustion engine according to claim 30, wherein a flow passage resistance of the exhaust bypass passage (1a) is smaller than a flow passage resistance of the turbine flow passage.

32. An exhaust turbo-supercharger for an internal combustion engine, in the internal combustion engine comprising the exhaust turbo-supercharger and a catalyst (21), which comprises a catalyst mounting portion in a turbine outlet portion.

33. An exhaust turbo-supercharger for an internal combustion engine, in the internal combustion engine comprising the exhaust turbo-supercharger which comprises:
an exhaust bypass flow passage (1a) which is independent of and arranged in parallel with a turbine flow passage for guiding exhaust gas into a turbine impeller (5);
a valve seat plane (1b) and an exhaust bypass valve (9) in said exhaust bypass flow passage (1a), a flow passage resistance of said exhaust bypass flow passage (1a) being smaller than a flow passage resistance of the turbine flow passage; and
a catalyst mounting portion in a turbine outlet portion.

34. An exhaust turbo-supercharger for an internal combustion engine, in the internal combustion engine comprising the exhaust turbo-supercharger, wherein an exhaust bypass flow passage (1a) independent of and arranged in parallel with a turbine flow passage for guiding exhaust gas into a turbine impeller (5) is formed, and an exhaust flowing portion from an exhaust manifold (1) to the exhaust bypass passage and a turbine outlet are connected by a straight pipe.

35. An exhaust turbo-supercharger for an internal combustion engine, wherein an exhaust manifold (1) and a turbine case (2) are formed of a single member.

36. An exhaust turbo-supercharger for an internal combustion engine, wherein a thermal insulation mechanism is provided in a turbine case.

37. An exhaust turbo-supercharger for an internal combustion engine, which comprises an exhaust bypass valve (9) in order to thermally insulate a turbine case (2).

38. An exhaust turbo-supercharger for an internal combustion engine, wherein an inner wall surface of a turbine flow passage is coated with ceramic.

39. An exhaust turbo-supercharger for an internal combustion engine, which comprises a porous material on an inner wall surface of turbine flow passage.

40. An exhaust turbo-supercharger for an internal combustion engine, which comprises a mechanism in an intake air flow passage, said intake air flow passage being capable of making intake air bypassing a compressor.

41. An exhaust turbo-supercharger for an internal combustion engine according to claim 40, which comprises an intake air bypass flow passage connecting a compressor case inlet flow passage (4a) for guiding intake air into a compressor impeller (6) with a compressor case outlet flow passage (4b) for guiding intake air passed through said compressor impeller (6) to the outside of a compressor case (4); and an intake air bypass valve (12) and a valve seat (47) in said intake air bypass flow passage.

42. An exhaust turbo-supercharger for an internal combustion engine according to claim 40, wherein a movable part forming a compressor case R-profile opposite to a blade outer peripheral R-profile of said compressor impeller (6) is movable in an axial direction of a turbine shaft (7).

43. An exhaust turbo-supercharger for an internal combustion engine, in the internal combustion engine comprising the exhaust turbo-supercharger, which comprises an exhaust bypass valve (9) and a valve seat (1b) for the exhaust bypass valve (9) in an exhaust bypass flow passage (1a), an opening area of said exhaust bypass valve (9) being changed by moving said exhaust bypass valve (9) into and out of an opening portion of said valve seat (1b).

44. An exhaust turbo-supercharger for an internal combustion engine, which comprises a mechanism in an exhaust flow passage, said mechanism making exhaust gas flow out by bypassing a turbine.

45. An exhaust turbo-supercharger for an internal combustion engine according to any one of claims 11, 13 to 17, wherein an exhaust gas inlet portion of said exhaust bypass flow passage (1a) and said turbine outlet are connected by a straight pipe, and said exhaust gas bypass valve (9) is opened during a starting period of operation of the internal combustion engine to make exhaust gas flow by bypassing said turbine.
